# EUROPÄISCHE PATENTSCHRIFT

(11) **EP 3 090 619 B1**
(45) Veröffentlichungstag und Bekanntmachung des Hinweises auf die Patenterteilung: **23.10.2019**
(21) Anmeldenummer: 16157048.6
(22) Anmeldetag: 24.02.2016
(51) Int. Cl.: A01D 45/02

(54) **VORSATZGERÄT ZUM ERNTEN VON IN REIHEN STEHENDEM ERNTEGUT**
AUXILIARY DEVICE FOR HARVESTING CROPS ARRANGED IN ROWS
BEC CUEILLEUR DE RÉCOLTE DISPOSÉE EN RANGÉES

(30) Priorität: 07.05.2015 DE 102015107152
(43) Veröffentlichungstag der Anmeldung: 09.11.2016
(73) Patentinhaber: CLAAS Hungaria Kft., 5200 Törökszentmiklos (HU)
(72) Erfinder: Lenti, Tibor, 5662 Csanádapáca (HU); Bálint, Norbert, 6412 Balotaszállás (HU); Pàzsik, András, 5600 Békéscsaba (HU)
(74) Vertreter: CLAAS Gruppe

(56) Entgegenhaltungen:
- EP-A1- 1 142 467
- EP-A1- 2 695 509
- US-A- 5 910 092
- US-B1- 6 247 297

## Beschreibung

Die vorliegende Erfindung betrifft ein Vorsatzgerät zum Ernten von in Reihen stehendem Erntegut gemäß dem Oberbegriff des Anspruches 1. Ein solches Gerät ist aus EP 2695509 bekannt.

Vorsatzgeräte der eingangs genannten Art können so genannte Maispflücker sein, welche Erntegutaufnahme- und/oder Ernteguteinzugseinrichtungen aufweisen, die aus paarweise angeordneten Pflückwalzen aufweisen, die jeweils einen Pflückspalt zwischen sich ausbilden. In diese Pflückspalte wird denen mittels Einzugsketten das Erntegut eingezogen. Die Pflückwalzen sowie Einzugsketten sind durch ein zweiteiliges Abdeckelement, welches eine vordere Abdeckhaube und eine hintere Abdeckhaube umfasst, zumindest abschnittsweise abgedeckt. An der jeweiligen hinteren Abdeckhaube ist jeweils die vordere Abdeckhaube in Längsrichtung der hinteren Abdeckhaube im Wesentlichen fluchtend angeordnet ist. Für Transport- und/oder Wartungszwecke sind die vorderen Abdeckhauben in eine Transportstellung überführbar, in welcher die Erntegutaufnahme- und/oder Ernteguteinzugseinrichtungen zugänglich sind beziehungsweise die Erstreckung des Vorsatzgerätes senkrecht zu seiner Längsachse zu Transportzwecken verkürzt wird. Dies ist insbesondere dann notwendig, wenn das Vorsatzgerät an einer Erntemaschine montiert zu Transportzwecken im Straßenverkehr bewegt wird. Beispielsweise ist dies bei Mähdreschern mit daran angeordneten Maispflückern der Fall, die zur Einhaltung gesetzlicher Vorgaben hinsichtlich der zulässigen Breite beim Führen im Straßenverkehr zusammengefaltet werden müssen.

So ist aus der DE 30 48 327 C2 ein Vorsatzgerät mit einem zweiteiligen Abdeckelement bekannt, die vordere Abdeckhaube und die hintere Abdeckhaube gelenkig miteinander zu verbinden, um die vordere Abdeckhaube aus einer in Betriebsstellung in Längsrichtung mit der hinteren Abdeckhaube fluchtenden Anordnung durch Verschwenken um eine gemeinsame horizontale Achse in eine Spitzdachform zu überführen. Hierzu werden die jeweils äußeren, einander abgewandten Endbereiche der vorderen Abdeckhaube und der hinteren in der horizontalen Ebene aufeinander zu bewegt, während die in ihrer Betriebsstellung einander gegenüberliegenden Enden von vorderer Abdeckhaube und hinterer Abdeckhaube zur Überführung in die Transportstellung in vertikaler Richtung verschoben werden. Dadurch wird eine Reduzierung der Erstreckung des Vorsatzgerätes senkrecht zu seiner Längsachse erreicht.

Aus der EP 0 848 898 A1 ist ein Vorsatzgerät der eingangs genannten Art bekannt. Das als Maispflücker ausgeführte Vorsatzgerät umfasst mehrere nebeneinander angeordnete Erntegutaufnahme- und/oder Ernteguteinzugseinrichtungen, welche jeweils durch ein zweiteiliges Abdeckelement zumindest abschnittsweise abgedeckt sind. Das jeweilige Abdeckelement umfasst eine vordere Abdeckhaube und eine hintere Abdeckhaube. In Betriebsstellung des Vorsatzgerätes ist die vordere Abdeckhaube in Längsrichtung der hinteren Abdeckhaube im Wesentlichen fluchtend zu dieser angeordnet. Zu Transportzwecken ist die vordere Abdeckhaube um eine horizontale Achse relativ zu der hinteren Abdeckhaube schwenkbar. Mit dem Erreichen der Transportstellung steht die jeweilige vordere Abdeckhaube in einer bezüglich der zugehörigen hinteren Abdeckhaube etwa senkrechten Position. Diese Positionierung der vorderen Abdeckhauben erlaubt es nicht, ein Vorsatzgerät, welches in mehrere, relativ zueinander schwenkbare Abschnitte unterteilt ist, zur Einhaltung der im Straßenverkehr zulässigen Transportbreite zusammenzufalten, das heißt die zwei äußeren Rahmenteile des Vorsatzgerätes oberhalb des Mittenteils zu positionieren, da es zwangsläufig zu Kollisionen der vorderen Abdeckhauben miteinander käme. Gleiches gilt auch für die Ausgestaltung eines Vorsatzgerätes gemäß der DE 30 48 327 C2.

Der Erfindung liegt somit die Aufgabe zu Grunde, ein Vorsatzgerät der eingangs genannten Art derart weiterzubilden, dass die Überführung der vorderen Abdeckhaube in die Transportstellung verbessert wird.

Diese Aufgabe wird erfindungsgemäß durch die Merkmale des Anspruches 1 gelöst. Vorteilhafte Weiterbildungen sind Gegenstand der Unteransprüche.

Gemäß Anspruch 1 wird vorgeschlagen, dass die jeweilige vordere Abdeckhaube mittels einer Aktorik in eine Transportstellung überführbar ist, in welcher sich die vordere Abdeckhaube in einer Position oberhalb und im Wesentlichen parallel zu der hinteren Abdeckhaube befindet. Durch diese Anordnung der jeweiligen vorderen Abdeckhaube und hinteren Abdeckhaube zueinander wird in der Transportstellung einerseits eine erhebliche Verringerung der Erstreckung des Vorsatzgerätes erreicht. Andererseits ermöglicht diese Positionierung eine flache bauende Anordnung, wodurch auch das Zusammenfalten eines mehrteiligen Vorsatzgerätes zur Einhaltung der zulässigen Breite im Straßenverkehr gewährleistet ist. Die dann einander gegenüberliegenden vorderen Abdeckhauben und hinteren Abdeckhauben kollidieren nicht miteinander, wie es auf Grund der vorgeschlagenen Lösungen gemäß der EP 0 848 898 A1 oder der DE 30 48 327 C2 der Fall ist.

Dabei behält die vordere Abdeckhaube beim Übergang von der Betriebsstellung in die Transportstellung eine im Wesentlichen parallele Ausrichtung zu der hinteren Abdeckhaube bei. Hierdurch kann der Schwenkradius, auf dem sich das vordere Ende der vorderen Abdeckhaube bewegt, klein gehalten werden. Zudem kann hierdurch die Führung der vorderen Abdeckhaube bei einem manuellen Überführen von der Betriebsstellung in die Transportstellung durch eine Bedienperson für diese vereinfacht werden.

Vorzugsweise ist die vordere Abdeckhaube während ihrer Überführung aus der Betriebsstellung in die Transportstellung mittels der Aktorik auf einer Kreisbahn führbar. Durch die Beibehaltung der im Wesentlichen parallelen Ausrichtung der vorderen Abdeckhaube zu der hinteren Abdeckhaube während der Überführung aus der Betriebsstellung in die Transportstellung, kann der Radius der Kreisbahn, auf der sich die jeweilige vordere Abdeckhaube bei der Überführung bewegt, klein gehalten werden.

Gemäß einer alternativen Ausführungsform kann die vordere Abdeckhaube zu ihrer Überführung aus der Betriebsstellung in die Transportstellung in Längsrichtung der hinteren Abdeckhaube verschiebbar sein. Das Aufschieben der vorderen Abdeckhaube in Längsrichtung der hinteren Abdeckhaube hat den Vorteil, dass die vordere Abdeckhaube zumindest Abschnittsweise von dieser geführt ist. Zudem ist der für das Überführen von der Betriebsstellung in die Transportstellung erforderliche freie Raum oberhalb der hinteren Abdeckhaube deutlich kleiner.

Vorzugsweise kann die Aktorik zumindest einen Hebelarm umfassen, welcher mit einem Ende an einer horizontalen Achse an der vorderen Abdeckhaube und mit einem anderen Ende an einer horizontalen Schwenkachse an der hinteren Abdeckhaube schwenkbar angelenkt ist. Diese Variante ist besonders kostengünstig, da auf hydraulische oder elektrische Leitungen und dergleichen für eine als Hydraulikzylinder oder Elektromotoren ausgeführte Aktorik verzichtet werden kann. Das Überführen der vorderen Abdeckhaube von der Betriebsstellung in ihre Transportstellung und umgekehrt erfolgt manuell durch eine Bedienperson.

Gemäß einer weiteren Ausführungsform kann die Aktorik als eine Parallelogrammführung ausgeführt sein, welche endseitig an einer horizontalen Schwenkachse an der vorderen Abdeckhaube und an der hinteren Abdeckhaube schwenkbar angelenkt ist. Durch eine solche Parallelogrammführung lässt sich auf einfache Weise eine kreisbahnförmige Bewegung der vorderen Abdeckhaube realisieren.

Vorteilhafterweise kann die Aktorik ein Betätigungselement umfassen, mittels dem eine Arretierung des Hebelarmes in der Betriebsstellung als auch in der Transportstellung lösbar ist. Dabei sollte das Betätigungselement so angeordnet sein, dass es stets von der Frontseite des Vorsatzgerätes zugänglich ist.

Insbesondere kann das Betätigungselement im Wesentlichen achsparallel zu dem zumindest einen Hebelarm in Richtung der hinteren Abdeckhaube verschiebbar sein.

Dabei kann das Betätigungselement durch ein Federelement mit einer Federkraft beaufschlagt sein, die der Bewegungsrichtung des Betätigungselementes entgegengerichtet ist. Die Beaufschlagung des Betätigungselementes mit einer der Bewegungsrichtung entgegen gerichteten Federkraft sorgt für eine zuverlässige Arretierung der vorderen Abdeckhaube in der Arbeitsstellung wie auch Transportstellung. Schwingungen, die während des Erntebetriebes oder des Straßentransports auf das Vorsatzgerät und damit auf die Abdeckhauben übertragen werden, führen nicht zu einem unbeabsichtigten Lösen der Arretierung des Betätigungshebels und mit diesem der vorderen Abdeckhaube.

In einer bevorzugten Ausgestaltung der Erfindung kann die Aktorik einen Elektromotor umfassen, welcher an der horizontalen Schwenkachse der hinteren Abdeckhaube angreift. Hierzu kann der Elektromotor im Inneren der hinteren Abdeckhaube angeordnet sein. Der Elektromotor kann beidseitig herausragende Antriebswellen aufweisen, welche als Drehachse des zumindest einen Hebelarmes fungieren. Der Elektromotor kann mittels einer Steuerungseinrichtung eines Trägerfahrzeuges, wie einem selbstfahrenden Mähdrescher oder Feldhäcksler, an welchem das Vorsatzgerät angebracht ist, angesteuert werden, um die vordere Abdeckhaube im Bedarfsfall aus ihrer Arbeitsstellung in eine Transportstellung und umgekehrt zu überführen.

Die vorliegende Erfindung wird nachstehend anhand eines in den Zeichnungen dargestellten Ausführungsbeispiels näher erläutert.

Es zeigen:
- Fig. 1: eine schematische Frontansicht eines Vorsatzgerätes zum Ernten von in Reihen stehendem Erntegut;
- Fig. 2: eine Darstellung eines in Arbeitsstellung befindlichen Abdeckelements in einer teilweise freigeschnittenen Seitenansicht;
- Fig. 3: eine Darstellung eines in Transportstellung befindlichen Abdeckelements in einer teilweise freigeschnittenen Seitenansicht;
- Fig. 4a bis 4c: eine Darstellung eines im Übergang von der Arbeitsstellung gemäß der Fig. 2 in die Transportstellung gemäß Fig. 3 befindlichen Abdeckelements.

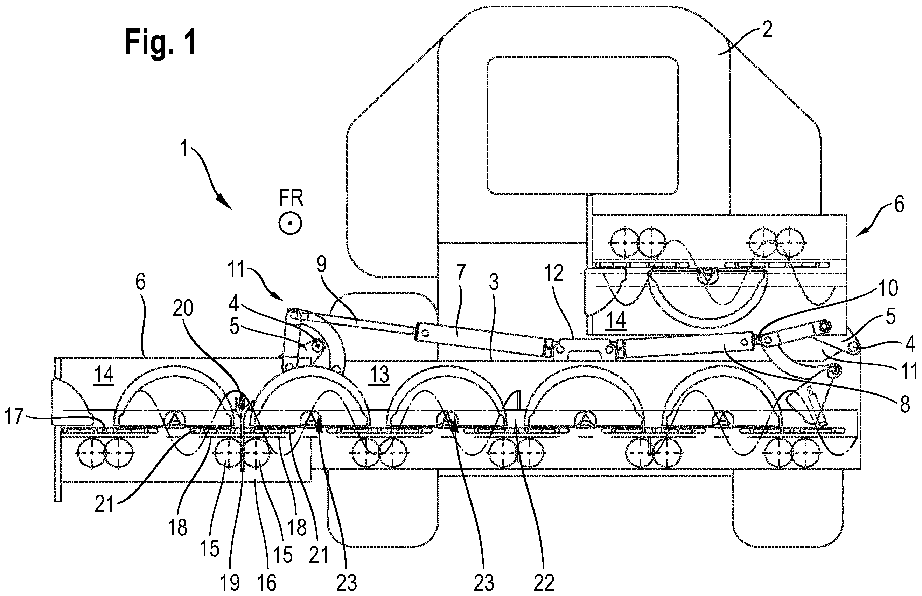

Die Darstellung in Fig. 1 zeigt ein als so genannter Maispflücker ausgebildetes Vorsatzgerät 1, welches in seinem rückwärtigen Bereich in nicht näher dargestellter Weise an ein Trägerfahrzeug 2 adaptiert ist, wobei das Trägerfahrzeug 2 beispielsweise als Mähdrescher oder Häcksler ausgebildet sein kann. Das Vorsatzgerät 1 unterteilt sich in einen direkt mit dem Trägerfahrzeug 2 verbundenen Mittelteil 3, der in seinen Randbereichen in Fahrtrichtung FR des Trägerfahrzeugs weisende Schwenkachsen 4 aufnimmt. Die Schwenkachsen 4 werden von Halteflanschen 5 umgriffen, die anderen Ends drehfest mit verschwenkbaren Seitenteilen 6 verbunden sind. In Fig. 1 ist das linke Seitenteil 6 in der bodennahen Arbeitsstellung und das rechte Seitenteil 6 in einer über dem Mittelteil 3 liegenden Transportstellung dargestellt. Zum Verschwenken der Seitenteile 6 von der Betriebsstellung- in die Transportstellung und umgekehrt sind dem nicht verschwenkbaren Mittelteil 3 Hubzylinder 7, 8 gelenkig zugeordnet, deren Kolbenstangen 9, 10 über je einen Koppelmechanismus 11 das Mittelteil 3 mit den jeweiligen Seitenteilen 6 drehbeweglich verbinden. Dabei kann abweichend von der dargestellten Ausführung die Kolbenstange 9, 10 auch direkt an dem jeweiligen Seitenteil 6 angeordnet sein. Eine Druckbeaufschlagung der Hubzylinder 7, 8 durch die nicht dargestellte Druckquelle des Trägerfahrzeugs 2 führt je nach Bewegungsrichtung der jeweiligen Kolbenstange 9, 10 zum Anheben oder Absenken der Seitenteile 6.

Aufgrund der Mehrteiligkeit des Vorsatzgerätes 1 untergliedert sich dessen Hauptrahmen 12 in einen Mittelrahmenteil 13 und diesem schwenkbeweglich zugeordnete Seitenrahmenteile 14.

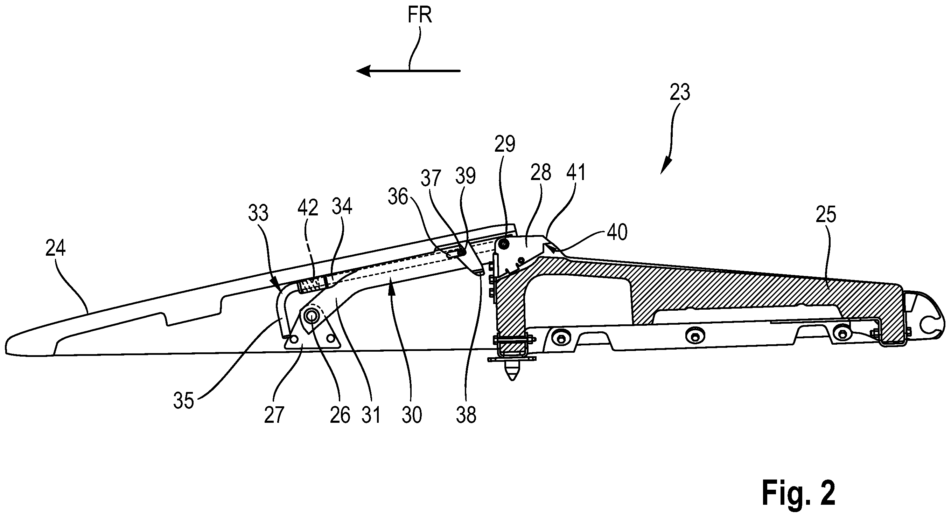

Die verschiedenen Rahmenteile 13, 14 des als Pflückvorsatz ausgebildeten Vorsatzgerätes 1 nehmen untenseitig als paarweise zusammenarbeitende Pflückwalzen 15 ausgeführte Arbeitsorgane 16 auf. In an sich bekannter Weise sind jedem Pflückwalzenpaar 15, 16 obenseitig zwischen sich einen Pflückspalt 17 ausbildende Pflückplatten 18 zugeordnet, durch deren Pflückspalt 17 ein von den Pflückwalzen 15 erfasster Stängel 19 hindurchgezogen wird, wobei die Fruchtstände 20 an den Pflückplatten 18 abgestriffen und mittels Förderketten 21 in den rückwärtigen Bereich der Pflückwalzen 15 gefördert werden. Im dargestellten Ausführungsbeispiel ist dem Vorsatzgerät 1 im rückwärtigen Bereich der Pflückwalzen 15 eine Querförderschnecke 22 zugeordnet, die die von den Förderketten 21 in diesen Bereich transportierten Fruchtstände 20 mittig zusammenführt und in an sich bekannter Weise an das Trägerfahrzeug 2 übergibt. Zur Verbesserung der Stängelführung im Bereich der Arbeitsorgane 16 und zur Vermeidung übermäßiger Verschmutzungen sind die Abstände zwischen benachbarten Arbeitsorganen 16 durch Abdeckelemente 23 abgeschirmt. Die Abdeckelemente 23 setzen sich gemäß Fig. 2 aus einer vorderen Abdeckhaube 24 und einer wenigstens teilweise in diese vordere Abdeckhaube 24 hineinragenden hinteren Abdeckhaube 25 zusammen. Die hintere Abdeckhaube 25 ist am Hauptrahmen 12 beziehungsweise dessen Rahmenteile 13, 14 des Vorsatzgerätes 1 angelenkt.

Fig. 2 zeigt eine Darstellung des in Arbeitsstellung befindlichen Abdeckelements 23 in einer teilweise freigeschnittenen Seitenansicht. Das zweiteilige Abdeckelement 23 umfasst eine vordere Abdeckhaube 24 sowie eine hintere Abdeckhaube 25. Gemäß der Darstellung in Fig. 2 befinden sich die vordere Abdeckhaube 24 und die hintere Abdeckhaube 25 in ihrer Arbeitsstellung, das heißt, dass die vordere Abdeckhaube 24 in Längsrichtung gesehen im Wesentlichen fluchtend zu der hinteren Abdeckhaube 25 angeordnet ist. Die vordere und die hintere Abdeckhaube 24, 25 weisen einen im Wesentlichen U-förmigen Querschnittsverlauf auf. Dabei ist die geschlossene Oberseite der vorderen Abdeckhaube 24 in Richtung der hinteren Abdeckhaube 25 ansteigend ausgeführt. Hingegen weist die hintere Abdeckhaube 25 einen in Richtung ihres Anlenkpunktes am Hauptrahmen 12 des Vorsatzgerätes 1 abfallenden Verlauf der Oberseite auf. Die vordere Abdeckhaube 24 und die hintere Abdeckhaube 25 sind nach unten hin offen ausgeführt, so dass diese, in angehobener Position des Vorsatzgerätes, von unter her durch eine Bedienperson zugänglich sind. Die vordere Abdeckhaube 24 weist einen sich in Fahrtrichtung FR verjüngenden Querschnitt auf, welcher in einer Spitze mündet. Die vordere Abdeckhaube 24 dient als Halmteiler für das aufzunehmende stängelige Erntegut. Die vordere Abdeckhaube 24 weist auf ihrer Innenseite eine sich quer zur Fahrtrichtung FR erstreckende horizontale Achse 26 auf. Die Achse 26 ist in einer lösbar an der vorderen Abdeckhaube 24 befestigten ersten Lagerkonsole 27 gehaltert.

Die hintere Abdeckhaube 25 weist auf ihrer der vorderen Abdeckhaube 24 zugewandten Seite eine zweite Lagerkonsole 28 auf, in welcher eine horizontal verlaufende Schwenkachse 29 gehaltert ist. Zwischen der Achse 26 im Inneren der vorderen Abdeckhaube 24 und der Schwenkachse 29 an der zweiten Lagerkonsole 28 erstreckt sich zumindest ein Hebelarm 30, dessen eines Ende an der Schwenkachse 29 und dessen anderes Ende an der Achse 26 schwenkbar angelenkt ist. Der wenigstens eine Hebelarm 30 erstreckt sich im Wesentlichen parallel zur inneren Mantelfläche der vorderen Abdeckhaube 24 in Richtung der Spitze. In dem dargestellten Ausführungsbeispiel ist der Hebelarm 30 als ein hohlzylindrisches Profilelement ausgeführt. Der Hebelarm 30 weist einen im Wesentlichen geraden Abschnitt 31 auf, an den sich an seinem der Achse 26 zugewandten Ende ein nach unten geneigter Abschnitt 32 anschließt, mit dem der Hebelarm 30 an der Achse 26 schwenkbar angelenkt ist.

Weiterhin umfasst der Hebelarm 30 ein stangenförmiges Betätigungselement 33, welches sich im Inneren des Hebelarmes 30 im Wesentlichen achsparallel zu diesem erstreckt. Das Betätigungselement 33 ragt in Richtung der Spitze der vorderen Abdeckhaube 24 aus dem Hebelarm heraus. Das Betätigungselement 33 weist an seinem der Spitze des vorderen Abdeckelementes 24 zugewandten Ende einen abgewinkelten Betätigungsabschnitt 35 auf, der als Griff dient. Mittels des als Griff ausgeführten Betätigungsabschnitts 35 lässt sich das Betätigungselement 33 von einer Bedienperson manuell betätigen, um es relativ zu dem Hebelarm 30 in axialer Richtung zu bewegen. Oberhalb des geneigten Abschnittes 32 des Hebelarmes 30 befindet sich ein hohlzylindrischer Führungsabschnitt 34, der als Verlängerung des geraden Abschnittes 31 ausgebildet ist. Der Führungsabschnitt 34 nimmt in seinem Inneren eine Druckfeder 42 auf, welche sich an dem Hebelarm 30 abstützt. Die Druckfeder 42 beaufschlagt das Betätigungselement 33 mit einer Federkraft, die in Richtung der hinteren Abdeckhaube 25 gerichtet ist. Das Betätigungselement 33 wird auf diese Weise in einer definierten, gegenüber dem Hebelarm 30 eingezogenen Position gehalten. Der Hebelarm 30 weist auf seiner der Lagerkonsole 28 des hinteren Abdeckelementes 25 zugewandten Seite einander gegenüberliegend angeordnete, sich in Längsrichtung des Hebelarmes 30 erstreckende Ausnehmungen 36 auf, durch welche sich beidseitig an dem Betätigungselement 33 angeordnete zylindrische Vorsprünge 37 erstrecken. Die zylindrischen Vorsprünge 37 sind einander gegenüberliegend, senkrecht zur Längsachse des Betätigungselementes 33 an diesem angeordnet und weisen mit den Ausnehmungen 36 im Hebelarm 30 korrespondierende Abmessungen auf, so dass die zylindrischen Vorsprünge 37 in diesen Ausnehmungen 36 in Längsrichtung des Hebelarmes 30 frei hin und her bewegbar sind, wenn das Betätigungselement 33 entgegen der Federkraft relativ zum Hebelarm 30 manuell oder mechanisiert bewegt wird.

In der in Fig. 2 dargestellten Arbeitsstellung des Abdeckelementes 23 greift der jeweilige Vorsprung 37 in eine Aussparung 39 an einem Haltelement 38 ein. Das Haltelement 38 ist in dem dargestellten Ausführungsbeispiel als ein winkelförmiges Profilteil ausgeführt, welches an der Innenseite der vorderen Abdeckhaube 24 angeordnet ist. Vorzugsweise ist das Halteelement 38 hakenförmig ausgeführt. Das Halteelement 38 erstreckt sich im Inneren der vorderen Abdeckhaube 24 im Wesentlichen in vertikaler Richtung zur Oberseite der vorderen Abdeckhaube 24 und beidseitig des Hebelarmes 30. Auf Grund der Beaufschlagung des Betätigungselementes 33 mit der Federkraft werden die zylindrischen Vorsprünge 37 in den Aussparungen 39 der Halteelemente 38, welches als Widerlager fungiert, gehalten. Dadurch wird das vordere Abdeckelement 24 in seiner zum hinteren Abdeckelement 25 im Wesentlichen fluchtenden Ausrichtung gehalten beziehungsweise in dieser Stellung verriegelt.

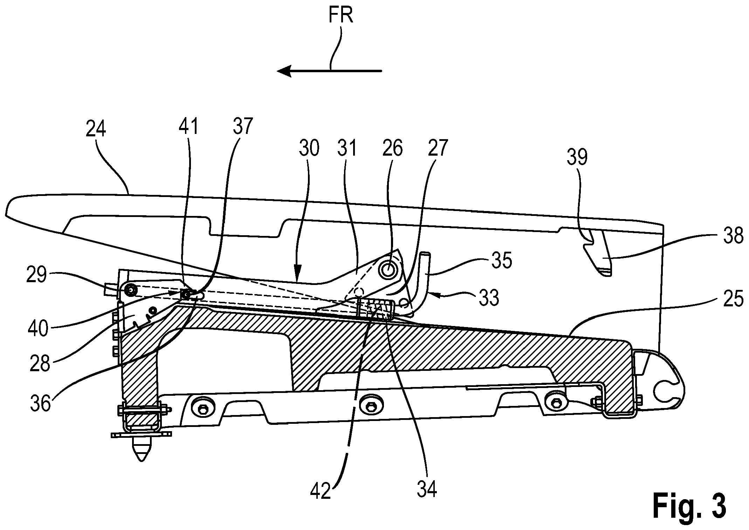

Fig. 3 zeigt eine Darstellung eines in Transportstellung befindlichen Abdeckelements 23 in einer teilweise freigeschnittenen Seitenansicht. In der Transportstellung des Abdeckelementes 23 befindet sich die vordere Abdeckhaube 24 in einer Position oberhalb und im Wesentlichen parallel zu der hinteren Abdeckhaube 25. Aufgrund der abfallend geneigten Oberseite des hinteren Abdeckelementes 25 legt sich das vordere Abdeckelement 24 mit seiner offenen Unterseite eng an die Oberseite der hinteren Abdeckhaube 25 an. Hierdurch wird eine geringe Gesamthöhe der übereinander liegend angeordneten Abdeckhauben 24 und 25 erreicht. Um zu verhindern, dass während der Transportfahrt sich die vordere Abdeckhaube 24 aus ihrer zur hinteren Abdeckhaube 25 benachbarten Positionierung lösen kann, ist die zweite Lagerkonsole 28 an der hinteren Abdeckhaube 25 derart modifiziert, dass die zylindrischen Vorsprünge 37 in entsprechende Aussparungen 40 an der zweiten Lagerkonsole 28 eingreifen können. Hierzu weist die zweite Lagerkonsole 28 auf ihrer der Schwenkachse 29 abgewandten Seite nasenförmige Vorsprünge 41 auf, unterhalb derer die Aussparungen 40 als Hinterschneidungen ausgebildet sind. Die Aussparungen 40 sind derart ausgeführt, dass die zylindrischen Vorsprünge 37 des Betätigungselements 33 in gleicher Weise mit diesen Aussparungen 40 der zweiten Lagerkonsole 28 in Eingriff gebracht werden können, wie es bei den Aussparungen 39 des Halteelementes 38 an der Innenseite der vorderen Abdeckhaube 24 der Fall ist. Durch das Schwenken des Hebelarmes 30 um etwa 180°oder darüber hinaus um die Schwenkachse 2 9 der zweiten Lagerkonsole 28 befindet sich der Hebelarm 30 und mit diesem das Betätigungselement 33 in einer Stellung, in der die Federkraft in Richtung der zweiten Lagerkonsole 28 gerichtet ist. Durch die von der Druckfeder 42 aufgebrachte Federkraft werden die Vorsprünge 37 in die Aussparungen 40 beziehungsweise gegen die zweite Lagerkonsole 28 gedrückt. Dadurch wird die vordere Abdeckhaube 24 in ihrer im Wesentlichen parallelen Anordnung zu der hinteren Abdeckhaube 25 gehalten.

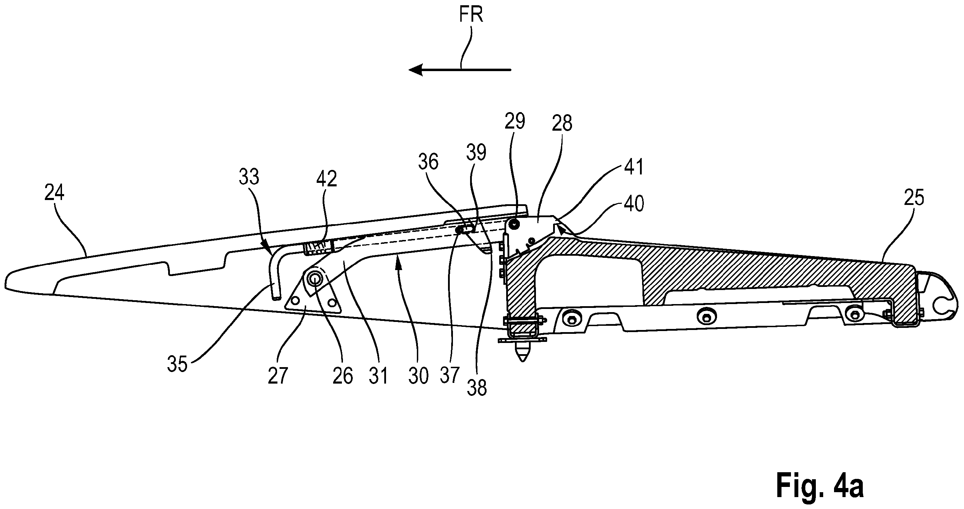

In den Fig. 4a bis 4c ist der Ablauf des Überganges der vorderen Abdeckhaube 24 des Abdeckelementes 23 von der Arbeitsstellung gemäß den Fig. 2 in die Transportstellung gemäß Fig. 3 näher dargestellt.

In Fig. 4a ist die vordere Abdeckhaube 24 durch eine Betätigung des Betätigungselementes 33 entriegelt und in einer geringfügig gegenüber der hinteren Abdeckhaube 25 um die Schwenkachse 29 verschwenkte Stellung dargestellt. Zum Lösen der Verriegelung wird in einem ersten Schritt das Betätigungselement 33 entgegen der Federkraft in Richtung der Spitze der vorderen Abdeckhaube 24 gezogen. Hierdurch löst sich das dem Halteelement 38 zugewandte Ende des Betätigungselementes 33 von dem Halteelement 39, indem die Vorsprünge 37 außer Eingriff mit den Aussparungen 39 des Halteelementes 38 gebracht werden. Danach ist die vordere Abdeckhaube 24 um die Schwenkachse 29 schwenkbar, um sie in Richtung der hinteren Abdeckhaube 25 in die Transportstellung zu überführen.

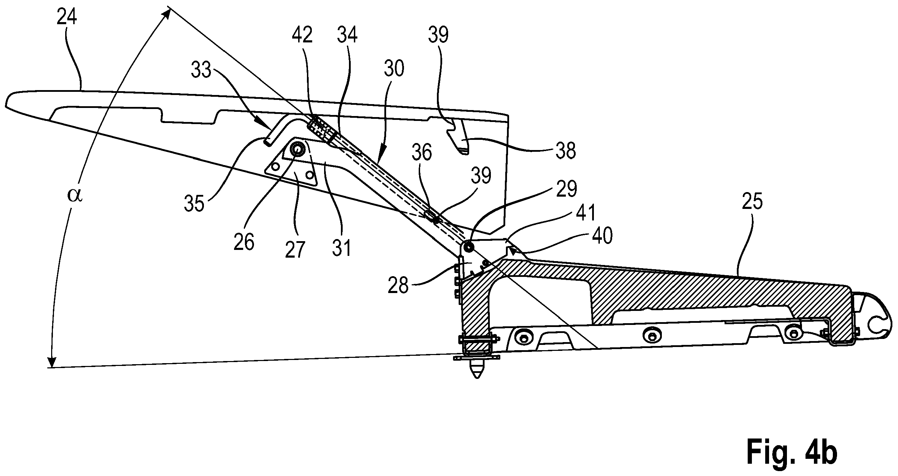

Durch das Anheben der vorderen Abdeckhaube 24 verlassen die Vorsprünge 37 den Eingriffsbereich der Aussparungen 39 am Halteelement 38, wie in Fig. 4b dargestellt ist. Der mit α bezeichnete Schwenkwinkel bezeichnet die Auslenkung der vorderen Abdeckhaube 24 gegenüber ihrer Ausgangslage in Arbeitsstellung. In der in Fig. 4b gezeigten Zwischenstellung beträgt der Schwenkwinkel α etwa 40°. Auf Grund der Anlenkung der vorderen Abdeckhaube 24 am äußeren Ende des Hebelarmes 30 lässt sich die vordere Abdeckhaube 24 um die Schwenkachse 29 auf einer Kreisbahn verschwenken, so dass die Ausrichtung der vorderen Abdeckhaube 24 zur hinteren Abdeckhaube 25 stets im Wesentlichen parallel zu dieser ist.

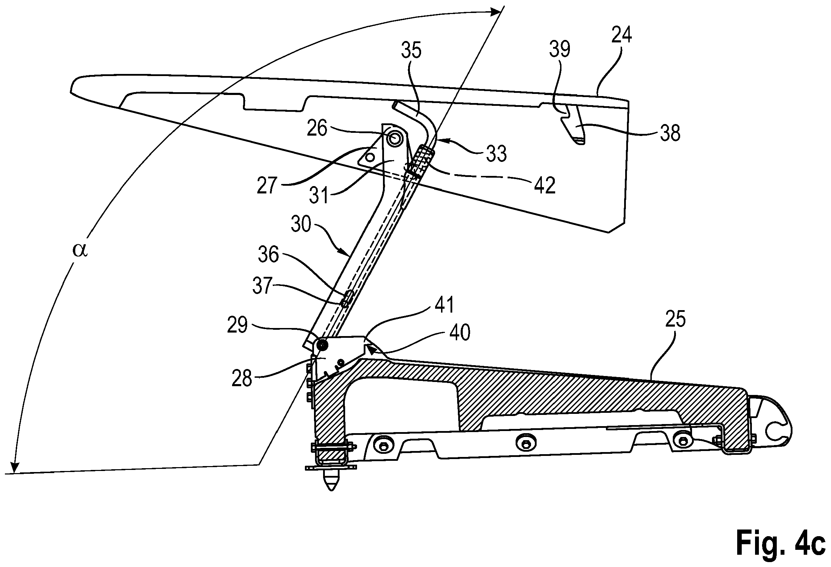

Die Darstellung in Fig. 4c zeigt die vordere Abdeckhaube 24 in einer Stellung relativ zur hinteren Abdeckhaube 25 mit einem Schwenkwinkel α größer 90°. Im Verlauf der weiteren Schwenkbewegung der vorderen Abdeckhaube 24 in Richtung der hinteren Abdeckhaube 25 nähern sich die Vorsprünge 37 am Betätigungselement 33 der zweiten Lagerkonsole 28 am vorderen Ende der hinteren Abdeckhaube 25 an. Die zweite Lagerkonsole 28 weist, wie weiter oben bereits beschrieben, auf ihrer der Schwenkachse 29 abgewandten Seite nasenförmige Vorsprünge 41 auf, unterhalb dessen jeweils eine Hinterschneidung als Aussparung 40 ausgebildet ist. Die Vorsprünge 37 werden bei Kontakt mit den nasenförmigen Vorsprüngen 41 in horizontaler Richtung ausgelenkt, so dass das Betätigungselement 33 entgegen der Federkraft bewegt wird. Mit dem Passieren des äußersten Endes des nasenförmigen Vorsprunges 41 fallen die Vorsprünge 37 zurück in die jeweilige Hinterschneidung beziehungsweise Aussparung 40 und verrasten dort. Mittels der in die Hinterschneidungen 40 eingreifenden Vorsprünge 37 wird die Transportstellung fixiert. Die von der Druckfeder 42 auf das Betätigungselement 33 ausgeübte Federkraft hält die vordere Abdeckhaube 24 in ihrer Transportstellung.

Das Überführen zurück in die Arbeitsstellung erfolgt in entsprechender Weise. Zunächst wird das Betätigungselement 33 entgegen der Federkraft in Richtung des Hauptrahmens 12 des Vorsatzgerätes 1 bewegt. Nun lässt sich die vordere Abdeckhaube 24 anheben und um die Schwenkachse 29 von der Oberseite der hinteren Abdeckhaube 25 weg verschwenken. Im Übrigen entspricht der Bewegungsablauf dem weiter oben anhand der Fig. 4a bis 4c beschriebenen in entgegengesetzter Richtung. Kommt das Halteelement 38 wieder mit den zylindrischen Vorsprüngen 37 in Berührung, so gleiten diese auf einem rampenförmigen Abschnitt des Haltelementes 38 in Richtung der Aussparungen 39. Dabei erfährt das Betätigungselement 33 wiederum eine Auslenkung in horizontaler Richtung, bevor die zylindrischen Vorsprünge 37 auf Grund der Rückstellkraft der Druckfeder 42 in die Aussparungen 39 einrasten, um die vordere Abdeckhaube 24 mit dem Erreichen der Arbeitsstellung in dieser zu fixieren.

**Bezugszeichenliste**

| | | | |
|---|---|---|---|
| **1** | Vorsatzgerät | **32** | Geneigter Abschnitt |
| **2** | Trägerfahrzeug | **33** | Betätigungselement |
| **3** | Mittelteil | **34** | Führungsabschnitt |
| **4** | Schwenkachse | **35** | Betätigungsabschnitt |
| **5** | Halteflansch | **36** | Ausnehmung |
| **6** | Seitenteil | **37** | Vorsprung |
| **7** | Hubzylinder | **38** | Halteelement |
| **8** | Hubzylinder | **39** | Aussparung |
| **9** | Kolbenstange | **40** | Aussparung |
| **10** | Kolbenstange | **41** | Nasenförmiger Vorsprung |
| **11** | Koppelmechanismus | **42** | Druckfeder |
| **12** | Hauptrahmen | | |
| **13** | Mittelteilrahmen | **α** | Schwenkwinkel |
| **14** | Seitenrahmenteil | **FR** | Fahrtrichtung |
| **15** | Pflückwalze | | |
| **16** | Arbeitsorgan | | |
| **17** | Pflückspalt | | |
| **18** | Pflückplatte | | |
| **19** | Stängel | | |
| **20** | Fruchtstand | | |
| **21** | Förderkette | | |
| **22** | Querförderschnecke | | |
| **23** | Abdeckelement | | |
| **24** | Vordere Abdeckhaube | | |
| **25** | Hintere Abdeckhaube | | |
| **26** | Achse | | |
| **27** | Erste Lagerkonsole | | |
| **28** | Zweite Lagerkonsole | | |
| **29** | Schwenkachse | | |
| **30** | Hebelarm | | |
| **31** | Gerader Abschnitt | | |

## Patentansprüche

1. Vorsatzgerät (1) zum Ernten von in Reihen stehendem Erntegut, umfassend mehrere nebeneinander angeordnete Erntegutaufnahme- und/oder Ernteguteinzugseinrichtungen (15, 17, 18), welche jeweils durch ein zweiteiliges Abdeckelement (23), welches eine vordere Abdeckhaube (24) und ein hintere Abdeckhaube (25) aufweist, zumindest abschnittsweise abgedeckt sind, wobei in Betriebsstellung des Vorsatzgerätes (1) die vordere Abdeckhaube (24) in Längsrichtung der hinteren Abdeckhaube (25) im Wesentlichen fluchtend angeordnet ist, und die jeweilige vordere Abdeckhaube (24) mittels einer Aktorik in eine Transportstellung überführbar ist, in welcher sich die vordere Abdeckhaube (24) in einer Position oberhalb und im Wesentlichen parallel zu der hinteren Abdeckhaube (25) befindet, **dadurch gekennzeichnet, dass** die vordere Abdeckhaube (24) beim Übergang von der Betriebsstellung in die Transportstellung eine im Wesentlichen parallele Ausrichtung zu der hinteren Abdeckhaube (25) beibehält.

2. Vorsatzgerät (1) nach Anspruch 1, **dadurch gekennzeichnet, dass** die vordere Abdeckhaube (24) während ihrer Überführung aus der Betriebsstellung in die Transportstellung mittels der Aktorik auf einer Kreisbahn führbar ist.

3. Vorsatzgerät (1) nach Anspruch 1, **dadurch gekennzeichnet, dass** die vordere Abdeckhaube (24) zu ihrer Überführung aus der Betriebsstellung in die Transportstellung in Längsrichtung der hinteren Abdeckhaube (25) verschiebbar ist.

4. Vorsatzgerät (1) nach einem der Ansprüche 1 bis 2, **dadurch gekennzeichnet, dass** die Aktorik zumindest einen Hebelarm (30) umfasst, welcher mit einem Ende an einer horizontalen Achse (26) an der vorderen Abdeckhaube und mit einem anderen Ende an einer horizontalen Schwenkachse (29) an der hinteren Abdeckhaube (25) schwenkbar angelenkt ist.

5. Vorsatzgerät (1) nach einem der Ansprüche 1 bis 2, **dadurch gekennzeichnet, dass** die Aktorik als eine Parallelogrammführung ausgeführt ist, welche endseitig an einer horizontalen Achse (26, 29) an der vorderen Abdeckhaube (24) und an der hinteren Abdeckhaube (25) schwenkbar angelenkt ist.

6. Vorsatzgerät (1) nach einem der Ansprüche 1 bis 5, **dadurch gekennzeichnet, dass** Arretiermittel zur Arretierung der vorderen Abdeckhaube (24) in der Transportstellung sowie der Betriebsstellung vorgesehen sind.

7. Vorsatzgerät (1) nach Anspruch 6, **dadurch gekennzeichnet, dass** die Aktorik ein Betätigungselement (33) umfasst, mittels dem eine Arretierung des Hebelarmes (30) mittels der Arretiermittel in der Betriebsstellung als auch in der Transportstellung lösbar ist.

8. Vorsatzgerät (1) nach Anspruch7, **dadurch gekennzeichnet, dass** das Betätigungselement (33) im Wesentlichen achsparallel zu dem zumindest einen Hebelarm (30) in Richtung der hinteren Abdeckhaube (25) verschiebbar ist.

9. Vorsatzgerät (1) nach Anspruch8, **dadurch gekennzeichnet, dass** das Betätigungselement (33) durch ein Federelement (42) mit einer Federkraft beaufschlagt ist, die der Bewegungsrichtung des Betätigungselementes (33) entgegengerichtet ist.

10. Vorsatzgerät (1) nach einem der Ansprüche 4 oder 5, **dadurch gekennzeichnet, dass** die Aktorik einen Elektromotor umfasst, welcher an der horizontalen Schwenkachse (29) der hinteren Abdeckhaube (25) angreift.

## Claims

1. An attachment (1) for harvesting crop material standing in rows, including a plurality of mutually juxtaposed crop material pickup and/or crop material intake devices (15, 17, 18) which are respectively at least portion-wise covered by a two-part cover element (23) having a front cover hood (24) and a rear cover hood (25), wherein in the operative position of the attachment (1) the front cover hood (24) is arranged substantially in alignment in the longitudinal direction of the rear cover hood (25) and the respective front cover hood (24) can be transferred by means of an actuator into a transport position in which the front cover hood (24) is disposed in a position above and substantially parallel to the rear cover hood (25), **characterised in that** in the transition from the operative position into the transport position the front cover hood (24) retains a substantially parallel orientation with respect to the rear cover hood (25).

2. An attachment (1) according to claim 1 **characterised in that** the front cover hood (24) can be guided by means of the actuator on the circular path during the transfer thereof from the operative position into the transport position.

3. An attachment (1) according to claim 1 **characterised in that** the front cover hood (24) is displaceable in the longitudinal direction of the rear cover hood (25) for transfer of the front cover hood from the operative position into the transport position.

4. An attachment (1) according to one of claims 1 and 2 **characterised in that** the actuator includes at least one lever arm (30) which is pivotably connected with one end at a horizontal axis (26) to the front cover hood and with another end at a horizontal pivot axis (29) to the rear cover hood (25).

5. An attachment (1) according to one of claims 1 and 2 **characterised in that** the actuator is in the form of a parallelogram guide means which is pivotably connected at the end at a horizontal axis (26, 29) to the front cover hood (24) and to the rear cover hood (25).

6. An attachment (1) according to one of claims 1 to 5 **characterised in that** there are provided arresting means for arresting the front cover hood (24) in the transport position and the operative position.

7. An attachment (1) according to claim 6 **characterised in that** the actuator includes an actuating element (33), by means of which an arresting action for the lever arm (30) by means of the arresting means is releasable in the operative position and also in the transport position.

8. An attachment (1) according to claim 7 **characterised in that** the actuating element (33) is displaceable substantially in axis-parallel relationship with the at least one lever arm (30) in the direction of the rear cover hood (25).

9. An attachment (1) according to claim 8 **characterised in that** the actuating element (33) is acted upon by a spring element (42) with a spring force directed in opposite relationship to the direction of movement of the actuating arm (33).

10. An attachment (1) according to one of claims 4 and 5 **characterised in that** the actuator includes an electric motor engaging the horizontal pivot axis (29) of the rear cover hood (25).

## Revendications

1. Outil frontal (1) pour récolter du produit de récolte disposé en rangs, comprenant plusieurs équipements de réception de produit de récolte et/ou d'alimentation en produit de récolte (15, 17, 18), qui sont respectivement recouverts au moins par endroits par un élément de recouvrement en deux parties (23), lequel comporte un capot de recouvrement avant (24) et un capot de recouvrement arrière (25), dans la position de service de l'outil frontal (1) le capot de recouvrement avant (24) étant disposé sensiblement dans l'alignement de la direction longitudinale du capot de recouvrement arrière (25), et le capot de recouvrement avant respectif (24) est transférable au moyen d'un ensemble actionneur dans une position de transport dans laquelle le capot de recouvrement avant (24) se trouve dans une position située au-dessus et sensiblement parallèle au capot de recouvrement arrière (25), **caractérisé en ce que**, lors du transfert de la position de service à la position de transport, le capot de recouvrement avant (24) conserve son orientation sensiblement parallèle au capot de recouvrement arrière (25).

2. Outil frontal (1) selon la revendication 1, **caractérisé en ce que**, lors de son transfert de la position de service à la position de transport au moyen de l'ensemble actionneur, le capot de recouvrement avant (24) est déplaçable sur une trajectoire circulaire.

3. Outil frontal (1) selon la revendication 1, **caractérisé en ce que**, pour son transfert de la position de service à la position de transport, le capot de recouvrement avant (24) est coulissant dans la direction longitudinale du capot de recouvrement arrière (25).

4. Outil frontal (1) selon une des revendications 1 à 2, **caractérisé en ce que** l'ensemble actionneur comprend au moins un bras de levier (30) qui est articulé à pivotement, par une extrémité, sur un axe horizontal (26) du capot de recouvrement avant, et par une autre extrémité, sur un axe de pivotement horizontal (29) du capot de recouvrement arrière (25).

5. Outil frontal (1) selon une des revendications 1 à 2, **caractérisé en ce que** l'ensemble actionneur est conformé en guide en parallélogramme qui est articulé à pivotement par ses extrémités sur un axe horizontal (26, 29) du capot de recouvrement avant (24) et du capot de recouvrement arrière (25) .

6. Outil frontal (1) selon une des revendications 1 à 5, **caractérisé en ce que** des moyens de blocage sont prévus pour bloquer le capot de recouvrement avant (24) dans la position de transport ainsi que dans la position de service.

7. Outil frontal (1) selon la revendication 6, **caractérisé en ce que** l'ensemble actionneur comprend un élément d'actionnement (33) qui permet de libérer un blocage du bras de levier (30) par les moyens de blocage dans la position de service ainsi que dans la position de transport.

8. Outil frontal (1) selon la revendication 7, **caractérisé en ce que** l'élément d'actionnement (33) est déplaçable de manière sensiblement parallèle axialement au au moins un bras de levier (30) en direction du capot de recouvrement arrière (25).

9. Outil frontal (1) selon la revendication 8, **caractérisé en ce que** l'élément d'actionnement (33) est sollicité par un élément élastique (42) avec une force élastique qui est dirigée à l'opposé de la direction de déplacement de l'élément d'actionnement (33).

10. Outil frontal (1) selon une des revendications 4 ou 5, **caractérisé en ce que** l'ensemble actionneur comprend un moteur électrique qui agit sur l'axe de pivotement horizontal (29) du capot de recouvrement arrière (25).
